(19) Europäisches Patentamt

European Patent Office

Office européen des brevets

(11) **EP 1 166 101 B1**

(12) **EUROPÄISCHE PATENTSCHRIFT**

(45) Veröffentlichungstag und Bekanntmachung des Hinweises auf die Patenterteilung:
**22.09.2004   Patentblatt 2004/39**

(21) Anmeldenummer: **00912367.0**

(22) Anmeldetag: **11.02.2000**

(51) Int Cl.$^7$: **G01N 33/00**

(86) Internationale Anmeldenummer:
**PCT/DE2000/000406**

(87) Internationale Veröffentlichungsnummer:
**WO 2000/047989 (17.08.2000 Gazette 2000/33)**

(54) **Gassensor mit einer für Kohlendioxid durchlässigen Schutzschicht**

Gas sensor with a carbon dioxide permeable protective layer

Capteur de gaz avec une couche de protection permeable au dioxyde de carbone

(84) Benannte Vertragsstaaten:
**CH DE FR GB IT LI**

(30) Priorität: **12.02.1999   DE 19905776**

(43) Veröffentlichungstag der Anmeldung:
**02.01.2002   Patentblatt 2002/01**

(73) Patentinhaber: **ROBERT BOSCH GMBH**
**70442 Stuttgart (DE)**

(72) Erfinder:
• **BRINZ, Thomas**
**D-73266 Bissingen Unter der Teck (DE)**
• **HENSEL, Andreas**
**D-71665 Vaihingen (DE)**

(56) Entgegenhaltungen:
WO-A-97/13147        DE-A- 19 549 147
DE-C- 4 339 737       US-A- 4 347 732

• **DATABASE WPI Week 197633 Derwent Publications Ltd., London, GB; AN 1976-62049X[33] XP002141923 & JP 50 036361 A (KANEBO LTD), 5. April 1975 (1975-04-05)**
• **DATABASE WPI Week 198729 Derwent Publications Ltd., London, GB; AN 1987-201955[29] XP002141924 & JP 62 129149 A (MITSUBISHI HEAVY IND CO LTD), 11. Juni 1987 (1987-06-11)**
• **PATENT ABSTRACTS OF JAPAN vol. 018, no. 530 (P-1809), 6. Oktober 1994 (1994-10-06) & JP 06 186198 A (TOKUYAMA SODA CO LTD), 8. Juli 1994 (1994-07-08)**

**Beschreibung**

Die Erfindung betrifft eine Schutzschicht, die für $CO_2$ relativ durchlässig und für $SO_2$ relativ undurchlässig ist. Eine derartige Schutzschicht wird beispielsweise dazu verwendet, bei einem Rauchsensor eine $CO_2$-sensitive Polymerschicht vor einer Beschädigung bzw. Kontamination durch $SO_2$ zu schützen. Eine solche $CO_2$-sensitive Polymerschicht dient bei einem Brandmelder als Gassensor und detektiert einen $CO_2$-Gehalt eines Raumes, in dem der Brandmelder angebracht ist. Vorzugsweise besteht die $CO_2$-sensitive Polymerschicht aus einer Membran, die aus einer polymeren Matrix (z.B. Polydimethylsiloxan), einer Hilfsbase (Tetraalkylammoniumhydroxid) und einem pH-sensitiven Farbstoff (z.B. Thymolblau oder andere Derivate) aufgebaut ist. Eine Beaufschlagung dieser $CO_2$-sensitiven Membran mit $CO_2$ führt zu reversiblen Reaktionen, die vorzugsweise optisch, insbesondere auch elektrisch oder massensensitiv, nachweisbar sind und somit einen Rückschluß auf den $CO_2$-Gehalt im überwachten Raum zulassen.

Wenn jedoch $SO_2$ auf diese $CO_2$-sensitive Membran auftrifft, führt dies zu irreversiblen Reaktionen des Sensormaterials und somit zu einer Zerstörung der $CO_2$-sensitiven Eigenschaft des Sensors. Da diese Reaktion der Sensormembran $SO_2$ irreversibel ist, kommt es auf der Membran zu einer Anreicherung von $SO_2$-Reaktionsprodukten, so daß selbst eine geringe $SO_2$-Konzentration im Laufe der Zeit die Sensormembran beschädigt und deren $CO_2$-Sensitivität reduziert, wodurch der mit diesem $CO_2$-sensitiven Membransensor ausgestattete Brandmelder letztlich unbrauchbar wird.

Bekannte Schutzschichten sind als Pulverpreßkörper oder Granulate ausgebildet, die für $SO_2$ relativ undurchlässig und für $CO_2$ relativ durchlässig sind. Ebenso sind Molekularfilter bekannt, die Unterschiede in der Molekularstruktur der $CO_2$-Moleküle ausnutzen und somit für $SO_2$-Moleküle relativ undurchlässig und für $CO_2$-Moleküle relativ durchlässig sind. Wenn eine derartige Schutzschicht zum Schutz eines $CO_2$-Sensors verwendet wird, besteht jedoch der Nachteil, daß die $CO_2$-Moleküle erst diese Schutzschicht durchdringen müssen, um zum $CO_2$-Sensor zu gelangen. Dementsprechend kann sich für die $CO_2$-Moleküle die Zeitdauer, welche die $CO_2$-Moleküle benötigen, um bis zum $CO_2$-Sensor zu gelangen, erheblich vergrößern. Diese Zeitvergrößerung wirkt sich besonders stark aus, wenn sich die $CO_2$-Moleküle bei Fehlen einer gerichteten Strömung lediglich aufgrund ihrer temperaturbedingten kinetischen Energie bewegen (sogenannte "Braunsche Bewegung"), was z.B. bei der Rauchausbreitung im Brandfall regelmäßig vorliegt. Wenn demnach eine solche Schutzschicht bei einem Brandmelder verwendet wird, vergrößert sich durch die zur Durchdringung der Schutzschicht erforderliche Zeitdauer die Ansprechzeit des Brandmelders, das heißt die Zeit, bis der $CO_2$-Sensor eine erhöhte $CO_2$-Konzentration detektiert.

DE-C-4339737 offenbart ein Feuerungsanlage $-O_2$- Sensors mit einer Schutzschicht aus einem $SO_2$-reagierenden material, die zur Verlängerung des Ansprechzeit dient.

Vorteile der Erfindung

Der erfindungsgemäße Gassensor mit den Merkmalen des Anspruches 1 hat demgegenüber den Vorteil, daß die $CO_2$-Moleküle lediglich eine relativ kurze Zeitdauer benötigen, um die Schutzschicht zu durchdringen. Bei der Verwendung der erfindungsgemäßen Schutzschicht in einem Brandmelder ergibt sich dadurch der Vorteil, daß die durch die Schutzschicht bedingte Verlängerung der Ansprechzeit des Brandmelders reduziert wird.

Die Erfindung beruht auf der Erkenntnis, daß das Oxidationsprodukt von $SO_2$, nämlich $SO_3$, ein stark oxidierend und hygroskopisch wirkendes Säureanhydrid ist, das regelmäßig sofort zu Sulfat ($SO_4^{2-}$) weiter reagiert. Die sich damit ausbildenden Sulfate können sich jedoch am Trägermaterial ablagern, so daß die Sulfate in der Schutzschicht adsorbiert werden.

Die $SO_2$-Moleküle werden auf diese Weise auf dem Träger angereichert bzw. darauf gespeichert, während die $CO_2$-Moleküle ohne Reaktion die Schutzschicht durchdringen können. Da theoretisch ein einziger Kontakt eines $SO_2$-Moleküls mit der mit dem Oxidationsmittel ausgestatteten Trägeroberfläche ausreicht, um die genannte Reaktion auszulösen, müssen in der Schutzschicht keine komplizierten Strukturen - wie z.B. bei einem Pulverpresskörper - ausgebildet werden, um diesen einen Kontakt mit an Sicherheit grenzender Wahrscheinlichkeit gewährleisten zu können. Dementsprechend müssen die $CO_2$-Moleküle auch keine komplizierte Schutzschichtstruktur durchdringen, so daß die $CO_2$-Moleküle relativ ungehindert und unverzögert die erfindungsgemäße Schutzschicht durchdringen können.

Der Träger weist wenigstens ein Rohr auf, dessen Innenwandung mit dem Oxidationsmittel versehen ist. Bei dieser Ausführungsform müssen die $SO_2$-Moleküle und die $CO_2$-Moleküle dieses Rohr axial durchdringen, wobei nach den Gesetzen der Wahrscheinlichkeitslehre ein Wahrscheinlichkeitswert dafür vorliegt, daß die Moleküle auf die mit dem Oxidationsmittel beschichtete Innenwandung des Rohres auftreffen. Durch diesen Kontakt kann dann ein $SO_2$-Molekül am Träger adsorbiert werden, während ein $CO_2$-Molekül ohne Reaktion davon abprallt und seinen Weg fortsetzt. Über ein Verhältnis von Rohrquerschnitt zu Rohrlänge kann in Abhängigkeit einer mittleren freien Weglänge der Moleküle der Wert für diese Adsorptionswahrscheinlichkeit ermittelt werden.

Weitere wichtige Merkmale und Vorteile des erfindungsgemäßen Gassensors ergeben sich aus den Unteransprüchen, aus den Zeichnungen und aus der zugehörigen Figurenbeschreibung anhand der Zeichnungen.

Zeichnungen

Ausführungsbeispiele der erfindungsgemäßen Schutzschicht sind in den Zeichnungen dargestellt und werden im folgenden näher erläutert. Es zeigen, jeweils schematisch,

Fig. 1     einen Längsschnitt durch eine erste Ausführungsform der erfindungsgemäßen Schutzschicht,

Fig. 2     eine perspektivische Ansicht auf eine zweite Ausführungsform der erfindungsgemäßen Schutzschicht,

Fig. 3     einen Seitenansicht auf eine dritte Ausführungsform der Erfindung und

Fig. 4     eine Seitenansicht (Fig. 4a) und eine Draufsicht (Fig. 4b) auf eine vierte Ausführungsform der erfindungsgemäßen Schutzschicht.

Beschreibung der Ausführungsbeispiele

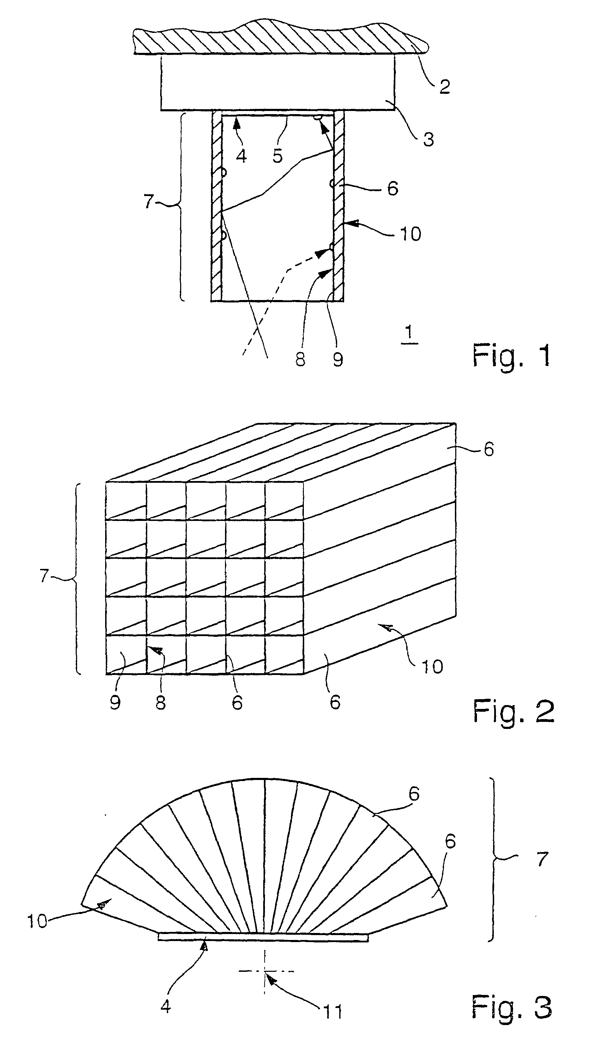

Entsprechend Fig. 1 ist in einem Raum 1 an einer Wand 2, insbesondere an einer Raumdecke, ein Rauchmelder 3 angebracht, der im Falle einer Rauchentwicklung im Raum 1 ein entsprechendes Warnsignal abgeben soll. Der Rauchmelder 3 enthält zu diesem Zweck einen $CO_2$-sensitiven Sensor 4, der mit einer $CO_2$-sensitiven Membran 5 ausgestattet ist. Darüber hinaus weist der Rauchmelder 3 einen Träger 10 auf, der hier als ein zylindrisches, insbesondere kreiszylindrisches, Rohr 6 ausgebildet ist. Dieses Rohr 6 ist bei dieser Ausführungsform Bestandteil einer mit einer geschweiften Klammer gekennzeichneten, erfindungsgemäßen Schutzschicht 7. Durch diese Schutzschicht 7, das heißt durch das Rohr 6, ist der $CO_2$-Sensor 4 vom Raum 1 abgetrennt.

Das Rohr 6 ist an einem axialen Ende am Rauchmelder 3 gasdicht angebracht, wobei das Rohr 6 den $CO_2$-Sensor 4 einschließt. Das dem $CO_2$-Sensor 4 gegenüberliegende axiale Ende des Rohres 6 ist offen und somit einem im Raum 1 enthaltenen Gas ausgesetzt. Eine Innenwandung 8 des Rohres 6 ist mit einer Beschichtung 9 aus einem nichtflüchtigen Oxidationsmittel versehen. Als Oxidationsmittel kann beispielsweise Kaliumpermanganat verwendet werden. Das Rohr 6 kann beispielsweise aus Aluminiumoxid gebildet sein.

Die erfindungsgemäße Schutzschicht arbeitet wie folgt:

Sobald ein $SO_2$-Molekül auf die Innenwandung 8 des Rohres 6 auftrifft (die Bewegungsbahn eines solchen $SO_2$-Moleküles ist durch eine unterbrochene Linie symbolisiert), wird durch das Oxidationsmittel das $SO_2$-Molekül zu einem $SO_3$-Molekül aufoxidiert, wobei sich außerdem Braunstein ($MnO_2$) ausbildet. Das Säureanhydrid $SO_3$ reagiert sofort weiter zu ($SO_4^{2-}$) und verbindet sich mit freigesetzten Kaliumverbindungen zu $K_2SO_4$. Die durch diese Reaktionen gebildeten Festkörper, nämlich $MnO_2$ und $K_2SO_4$, setzen sich an der Innenwandung 8 des Rohres 6 fest, so daß insoweit die $SO_2$-Moleküle vom Träger 10 der Schicht 7 bzw. vom Rohr 6 adsorbiert werden. Vorzugsweise ist das Rohr 6 aus einem korrosionsbeständigem bzw. gegenüber schwefelsauren Medien resistenten Material hergestellt, so daß weder die $SO_2$-, die $SO_3$-Moleküle noch ($SO_4^{2-}$) das Rohr 6 beschädigen können.

Im Unterschied zu einem $SO_2$-Molekül wird ein $CO_2$-Molekül, dessen Bewegungsbahn mit einer durchgezogenen Linie symbolisiert ist, von der Innenwandung 8 des Rohres 6 nicht adsorbiert, sondern ggf. abgelenkt, wobei das $CO_2$-Molekül ohne größere Zeitverzögerung auf die Membran 5 des $CO_2$-Sensors 4 auftreffen kann. Sobald eine hinreichende Menge an $CO_2$-Molekülen auf der Membran 5 entsprechende Reaktionen ausgelöst hat, gibt der Rauchmelder 3 das Warnsignal ab.

Gemäß Fig. 2 kann der Träger 10 der erfindungsgemäßen Schutzschicht 7 auch als Block ausgebildet sein, der aus einer Vielzahl nebeneinander angeordneter und achsparallel zueinander ausgerichteter zylindrischer Rohre 6 aufgebaut sein. Die Rohre 6 haben bei dieser Ausführungsform einen rechteckigen, insbesondere quadratischen, Querschnitt. Auch hier sind die Innenwandungen 8 mit der Oxidationsmittel-Beschichtung 9 versehen.

Derartige blockartige Träger 10 lassen sich besonders einfach aus Katalysatormonolithen herstellen, die lediglich noch mit der Oxidationsmittel-Beschichtung 9 versehen werden müssen.

Entsprechend Fig. 3 kann der Träger 10 der Schutzschicht 7 auch als Block ausgebildet sein, bei dem die einzelnen Rohre 6 bezüglich einer senkrecht auf der Zeichnungsebene stehenden Geraden oder eines Punktes 11 radial ausgerichtet sind. Bei der in Fig. 3 dargestellten speziellen Ausführungsform sind die Rohre 6 nicht zylindrisch ausgebildet, sondern mit einem Querschnitt ausgestattet, der sich in Richtung auf den Punkt oder die Gerade 11 hin verjüngt. Diese Ausführungsform ermöglicht ein Eindringen von Molekülen in die Rohre 6 aus einem großen Raum-Winkelbereich, so daß $CO_2$-Moleküle aus nahezu allen Raumrichtungen zum $CO_2$-Sensor 4 gelangen können.

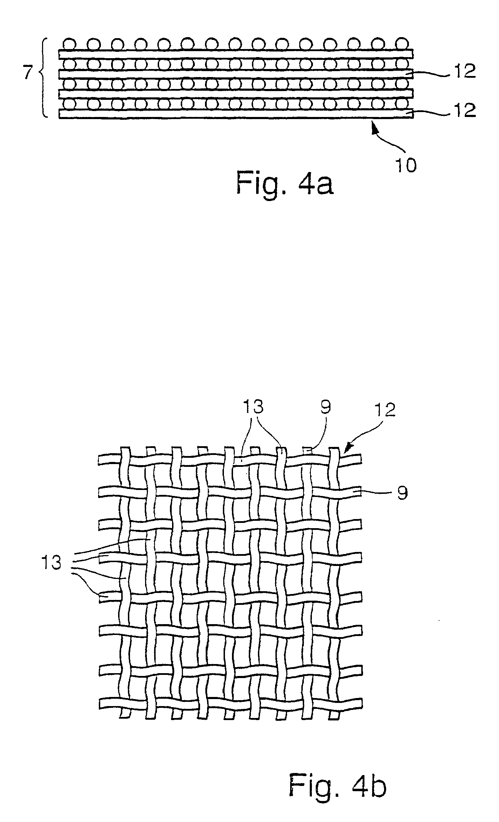

Entsprechend den Fig. 4a und 4b ist der Träger 10 der Schutzschicht 7 wiederum aus einem Block gebildet, der hier aus mehreren, übereinander gestapelten Gittern 12 gebildet ist, die jeweils aus einer Vielzahl von einander kreuzenden Gitterstäben 13 gebildet sind. Die einzelnen Gitter 12 brauchen dabei nicht wie in den Fig. 4a und 4b zueinander fluchtend aufeinanderliegen, vielmehr können die einzelnen Gitter 12 auch versetzt zueinander angeordnet sein. Die Oxidbeschichtung 9 ist hier auf die Oberfläche der Gitterstäbe 13 aufgebracht. Durch die Anzahl der aufeinander gestapelten Gitter 12 und durch deren Maschenweite wird die Adsorptionswahrscheinlichkeit bestimmt, das heißt der Wahrscheinlichkeitswert dafür, daß ein in die Schutzschicht 7 eindringendes $SO_2$-Molekül auf die Oberfläche eines der Gitterstäbe 13 auftrifft, dort mit dem Oxidationsmittel reagiert und so in der Schutzschicht 7 adsorbiert wird.

**Patentansprüche**

1. Gassensor mit einer für $CO_2$ relativ durchlässigen und für $SO_2$ relativ undurchlässigen Schutzschicht, die einen gasdurchlässigen Träger (10) aus einem gegenüber schwefelsauren Medien, z. B. $SO_2$ und $SO_3$, resistenten Material umfasst, und die eine Oberfläche (8) aufweist, die einem Gas aussetzbar ist und mit einem Oxidationsmittel versehen ist, dessen Oxidationspotential ausreicht, $SO_2$ zu oxidieren, **dadurch gekennzeichnet, dass** der Träger (10) wenigstens ein Rohr (6) aufweist, dessen Innenwandung (8) mit dem Oxidationsmittel versehen ist.

2. Gassensor nach Anspruch 1, **dadurch gekennzeichnet, dass** ein nichtflüchtiges Oxidationsmittel verwendet wird.

3. Gassensor nach Anspruch 1 oder 2, **dadurch gekennzeichnet, dass** als Oxidationsmittel Kaliumpermanganat verwendet wird.

4. Gassensor nach einem der Ansprüche 1 bis 3, **dadurch gekennzeichnet, dass** der Träger (10) aus Aluminiumoxid besteht.

5. Gassensor nach einem der Ansprüche 1 bis 4, **dadurch gekennzeichnet, dass** der Träger (10) als Block ausgebildet ist, der aus einer Vielzahl von aneinander angeordneten zylindrischen Rohren (6) aufgebaut ist, die zueinander achsparallel ausgerichtet sind.

6. Gassensor nach einem der vorhergehenden Ansprüche, **dadurch gekennzeichnet, dass** die Rohre (6) kreiszylindrisch ausgebildet sind.

7. Gassensor nach einem der Ansprüche 1 bis 4, **dadurch gekennzeichnet, dass** der Träger (10) als Block ausgebildet ist, der aus mehreren aneinander angeordneten Rohren (6) aufgebaut ist, die bezüglich einer Geraden oder bezüglich eines Punktes (11) radial ausgerichtet sind.

8. Gassensor nach Anspruch 7, **dadurch gekennzeichnet, dass** die Rohre (6) einen Querschnitt aufweisen, der sich zur Geraden bzw. zum Punkt (11) hin verjüngt.

9. Rauchmelder mit einem $CO_2$-Sensor, **dadurch gekennzeichnet, dass** der $CO_2$-Sensor (4) mit einer Schutzschicht (7) nach einem der vorhergehenden Ansprüche ausgestattet ist, die den $CO_2$-Sensor (4) von einem auf einen $CO_2$-Gehalt zu überwachenden Raum (1) trennt.

**Claims**

1. Gas sensor having a protective layer which is relatively permeable to $CO_2$ and is relatively impermeable to $SO_2$, comprises a gas-permeable support (10) made from a material which is resistant to acidic sulphur-containing media, e.g. $SO_2$ and $SO_3$, and has a surface (8) which can be exposed to a gas and is provided with an oxidizing agent whose oxidation potential is sufficient to oxidize $SO_2$, **characterized in that** the support (10) includes at least one tube (6), the inner wall (8) of which is provided with the oxidizing agent.

2. Gas sensor according to Claim 1, **characterized in that** a nonvolatile oxidizing agent is used.

3. Gas sensor according to Claim 1 or 2, **characterized in that** the oxidizing agent used is potassium permanganate.

4. Gas sensor according to one of Claims 1 to 3, **characterized in that** the support (10) consists of aluminium oxide.

5. Gas sensor according to one of Claims 1 to 4, **characterized in that** the support (10) is designed as a block which is composed of a multiplicity of cylindrical tubes (6) which are arranged against one another and oriented axially parallel with respect to one another.

6. Gas sensor according to one of the preceding claims, **characterized in that** the tubes (6) are cylindrical in form.

7. Gas sensor according to one of Claims 1 to 4, **characterized in that** the support (10) is designed as a block which is composed of a plurality of tubes (6) which are arranged against one another and are oriented radially with respect to a straight line or with respect to a point (11).

8. Gas sensor according to Claim 7, **characterized in that** the cross section of the tubes (6) narrows towards the straight line or the point (11).

9. Smoke alarm having a $CO_2$ sensor, **characterized**

**in that** the $CO_2$ sensor (4) is equipped with a protective layer (7) as described in one of the preceding claims, which separates the $CO_2$ sensor (4) from a room (1) whose $CO_2$ content is to be monitored.

**Revendications**

1. Capteur de gaz avec une couche de protection relativement perméable au $CO_2$ et relativement imperméable au $SO_2$, qui comprend un support (10) perméable au gaz en un matériau résistant aux fluides à base d'acides sulfuriques tels que par exemple le $SO_2$ et le $SO_3$, et qui présente une surface (8) pouvant être exposée au gaz et munie d'un agent oxydant dont le potentiel d'oxydation est suffisant pour oxyder du $SO_2$,
**caractérisé en ce que**
le support (10) présente au moins un tube (6) dont la paroi intérieure (8) est munie de l'agent oxydant.

2. Capteur de gaz selon la revendication 1,
**caractérisé en ce qu'**
on utilise un agent oxydant non volatile.

3. Capteur de gaz selon la revendication 1 ou 2,
**caractérisé en ce que**
comme agent oxydant on utilise du permanganate de potassium.

4. Capteur de gaz selon l'une quelconque des revendications 1 à 3,
**caractérisé en ce que**
le support (10) est en oxyde d'aluminium.

5. Capteur de gaz selon l'une quelconque des revendications 1 à 4,
**caractérisé en ce que**
le support (10) présente la forme d'un bloc réalisé à partir d'une pluralité de tubes cylindriques (6) juxtaposés, qui sont orientés de manière parallèle à l'axe les uns par rapport aux autres.

6. Capteur de gaz selon l'une quelconque des revendications précédentes,
**caractérisé en ce que**
les tubes (6) présentent une forme cylindrique circulaire.

7. Capteur de gaz selon l'une quelconque des revendications 1 à 4,
**caractérisé en ce que**
le support (10) présente la forme d'un bloc réalisé à partir d'une pluralité de tubes (6) juxtaposés, qui sont orientés dans le sens radial par rapport à une droite ou par rapport à un point (11).

8. Capteur de gaz selon la revendication 7,
**caractérisé en ce que**
les tubes (6) présentent une section transversale se rétrécissant en direction de la droite ou du point (11).

9. Détecteur de fumées comprenant un capteur de $CO_2$,
**caractérisé en ce que**
le capteur de $CO_2$ (4) présente une couche de protection (7) selon l'une quelconque des revendications précédentes, qui sépare le capteur de $CO_2$ (4) d'un espace (1) dont la teneur en $CO_2$ est à surveiller.

Fig. 1

Fig. 2

Fig. 3

Fig. 4a

Fig. 4b